Europäisches Patentamt

(19) European Patent Office

Office européen des brevets

(11) Publication number: **0 279 786 B1**

# (12) EUROPEAN PATENT SPECIFICATION

(45) Date of publication of patent specification:
**02.10.91 Bulletin 91/40**

(51) Int. Cl.⁵: **B60S 1/08**

(21) Application number: **88830020.9**

(22) Date of filing: **19.01.88**

(54) **Wiper device for a windscreen or rear window, particularly for motor vehicles.**

(30) Priority: **28.01.87 IT 6705187**

(43) Date of publication of application:
**24.08.88 Bulletin 88/34**

(45) Publication of the grant of the patent:
**02.10.91 Bulletin 91/40**

(84) Designated Contracting States:
**AT BE CH DE ES FR GB GR IT LI LU NL SE**

(56) References cited:
**DE-A- 3 037 579**
**FR-A- 2 129 367**
**US-A- 3 611 094**

(73) Proprietor: **INDUSTRIE MAGNETI MARELLI S.p.A.**
**Via Adriano 81**
**I-20128 Milano (IT)**

(72) Inventor: **Vassallo Paleologo, Pierangelo**
**Via Val Seriana 4**
**I-20025 Monza (IT)**

(74) Representative: **Quinterno, Giuseppe et al**
**c/o Jacobacci-Casetta & Perani S.p.A. Via Alfieri, 17**
**I-10121 Torino (IT)**

## Description

The present invention relates to a wiper for a windscreen or rear window, particularly for motor vehicles.

More specifically, the subject of the invention is a wiper for a windscreen or rear window of the type including a direct-current electric motor for operating at least one wiper arm and a control circuit including

a manually-operable control switch,

a relay with an excitation winding connectable to an electrical supply by means of the control switch, and a contact member movable between a first position, in which it connects the motor to the electrical supply, and a second position in which it closes a path which short-circuits the motor to cause it to brake and stop, and

a travel-limit switch controlled by the electric motor and movable between a working position, in which it closes a supply circuit for keeping the relay energised even after the control switch has been opened, and a rest position, in which it opens the supply circuit when the at least one wiper arm reaches a predetermined angular position ; the time interval in which the travel-limit switch switches between its working position and its rest position being greater than the time interval in which the relay switches between the first and second positions.

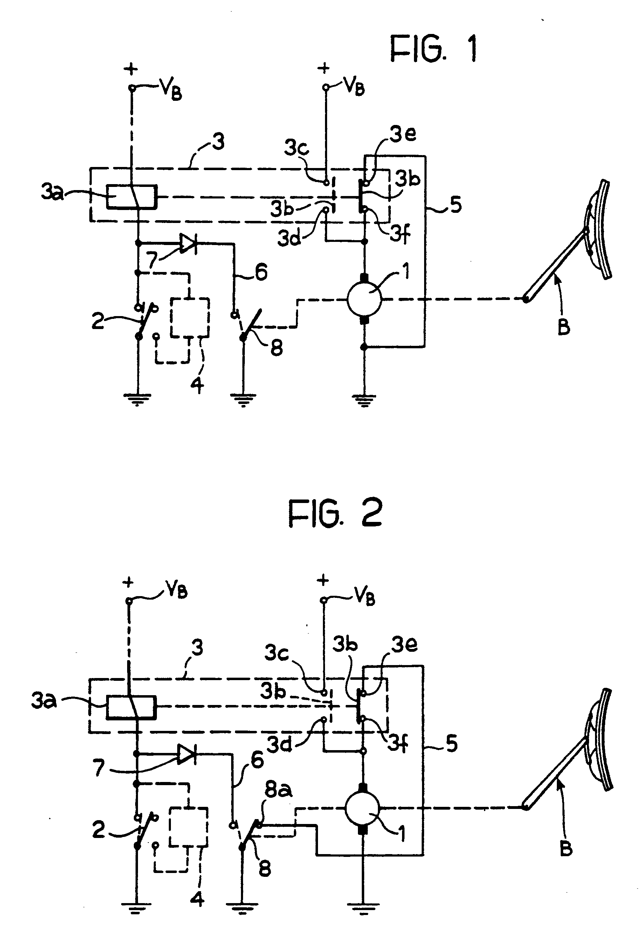

A known wiper of this kind ("In-House State of the Art") is shown in figure 1 of the appended drawings and is described in details in the following.

DE-A-3037579 and US-A-3611094 disclose other wiper devices comprising each a respective relay and a travel-limit switch. In these known arrangements the relay may be deenergised at will at any time, irrespective of the position of the travel-limit switch.

FR-A-2129367 discloses a further wiper arrangement comprising an electric driving motor, a relay controlling the energisation of said motor, and a transistorised travel-limit device. In parallel with the motor a conductive path is provided, in which there is interposed only one contact which is controlled by the said relay so as to be closed to short-circuit (and abruptly brake) said motor every time the wiper is to be stopped.

In windscreen or rear-window wipers of the previously indicated type, electrical arcs of a certain intensity may be struck as a result of the bouncing of the movable contact member of the relay when it switches from the first to the second position described above. Such arcs may cause material to be transported between the movable contact of the relay and the fixed contact or fixed contacts with which it cooperates in the second position, with the formation of pitting and lumps which may have a harmful effect on the proper operation of the relay or may actually cause the movable contact to stick to the fixed contact (or to the fixed contacts).

The object of the present invention is to produce a windsceen or rear window wiper of the type indicated above which does not have this disadvantage.

This object is achieved according to the invention by means of a device of the type specified above, whose principal characteristic lies in the fact that the travel-limit switch is connected to the path for short-circuiting the electric motor so as to enable it to be closed only when said travel-limit switch has reached the rest position.

Relays used in windscreen or rear window wipers typically have switching times of between 2 ms and 8 ms, averaging 5 ms. Travel-limit switches, which may be of the frontal-contact type with the movable contact controlled by a cam driven by the electric motor, or of the sliding-contact type with contacts slidable on a suitably-shaped conductive plate, usually have longer switching times, of the order of 20 ms.

As will be seen more clearly form the following, in the wiper device of the invention, the path for short-circuiting the electric motor is still open when the movable contact of the relay has moved into the second position, and closes only when the travel-limit switch subsequently has also returned to its rest position. Thus, any bouncing of the movable contact of the relay occurs with an open circuit and does not cause any arcs to be struck, and hence the disadvantages described above are avoided.

Further characteristics and advantages of the device according to the invention will become clear from the detailed description which follows, with reference to the appended drawings, provided purely by way of non-limiting example, in which :

Figure 1 is a circuit diagram of a prior art wiper device for a motor-vehicle windscreen or rear window, and

Figure 2 is a circuit diagram of a device produced according to the present invention.

With reference to Figure 1, a prior art wiper device for a windscreen or rear window includes a direct-current electric motor 1 for operating at least one wiper arm B, and a control circuit including a control switch 2 operable manually, for example, by means of a movable lever mounted adjacent the steering wheel of the motor vehicle. In the embodiment illustrated, the control switch 2 is arranged to assume a central, rest position (illustrated by a solid line) and a first working position (illustrated by a broken line) in which it connects one end of the excitation winding 3a of a relay 3 to earth. In the embodiment illustrated, the control switch 2 can assume a further working position in which it connects an intermittent-drive device 4 of known type to earth.

The winding 3a of the relay 3 has its other end connected to the positive pole of a direct current supply $V_B$, constituted by the battery of the motor vehicle.

This relay also includes a movable contact member 3b which, in the embodiment shown, cooperates with first and second pairs of fixed contacts indicated 3c, 3d and 3e, 3f. The fixed contacts 3c and 3d are connected to the positive pole of the battery and to the positive brush of the motor 1 respectively. The negative brush of the motor is connected to earth.

The fixed contact 3e is connected to earth through a path indicated 5 for short-circuiting the motor, while the contact 3f is also connected to the positive brush of the motor 1.

When the winding 3a is not energised, the movable contact 3b of the relay assumes the position illustrated by a solid line in Figure 1, in which it connects the contacts 3e and 3f to each other, closing the path short-circuiting the motor 1.

When the control switch 2 is moved into the position illustrated by a broken line, the winding 3a of the relay 3 is energised and the movable contact member 3b moves into the position illustrated by a broken line in Figure 1, in which it connects the contacts 3c and 3d and causes the motor 1 to be supplied. The latter operates the wiper arm (or the wiper arms).

If, during operation of the motor, the control switch is returned to the open position, the relay 3 is kept energised through an auto-supply line 6 in which a diode 7 and a travel-limit switch 8 connected to the earth are interposed. This switch is operated in known manner by the motor 1, for example by means of a cam member, and, as a result of the operating of the motor 1, can assume a working position (illustrated by a broken line in Figure 1) in which it closes the supply circuit enabling the relay to be kept energised. When the wiper arm has reached the predetermined angular, travel-limit position, the switch 8 moves into the rest position (illustrated by a solid line in Figure 1) in which the auto-supply circuit of the relay 3 is interrupted. This relay is de-energised and the movable contact member 3b is brought back against the contacts 3e and 3f under the action of resilient return means (not illustrated), closing the path for short-circuiting the motor 1. The latter is braked abruptly and stops practically instantaneously. It is just at this stage of the closing of the movable contact 3b against the fixed contacts 3e and 3f that arcs may be struck as a result of bouncing with the consequences described above.

Figure 2 illustrates the electrical diagram of a windscreen or rear window wiper device according to the present invention. In this Figure parts and components already described above have again been attributed the same reference numerals.

The device according to the invention differs from known devices in that the path for short-circuiting the motor 1 is not connected directly to earth but is connected to a fixed contact 8a on which the travel-limit switch 8 abuts in its rest position. Furthermore, according to the invention, the travel-limit switch must have a switching time for switching between the working position (illustrated by a broken line) and its rest position, which is greater than the time taken for the movable member 3b to move from the position illustrated with a broken line to the position illustrated with a solid line. This limitation imposed on the switching times of the relay and of the travel-limit switch is usually already satisfied by the travel-limit switches and the relays in current use.

By virtue of the above innovative characteristics, in the device according to Figure 2, when the wiper arm reaches the predetermined travel-limit position, the contact member 8 of the travel-limit switch leaves the working position (broken line), causing de-energisation of the relay 3. The movable member 3b of this relay is brought against the contacts 3e and 3f well before the member 8 of the travel-limit switch reaches the contact 8a. Thus, when the movable member 3b of the relay abuts against the fixed contacts 3e and 3f, the path for short-circuiting the motor 1 is still in fact open. This path is closed only when, after several milliseconds, the movable member of the travel-limit switch 8 reaches the fixed contacts 8a.

In this way, the striking of arcs as a result of the movable member 3b of the relay 3 bouncing against the contacts 3e and 3f is avoided. The useful life of the relay is thus greatly increased.

## Claims

1. A wiper device for a windscreen or rear window for motor vehicles, including a direct-current electric motor (1) for operating at least one wiper arm (B), and a control circuit comprising

a manually-operable control switch (2),

a relay (3) with an excitation winding (3a) connectable to an electrical supply ($V_B$) by means of the control switch (2), and a contact member (3b) movable between a first position (3c, 3d), in which it connects the motor (1) to the electrical supply ($V_B$), and a second position (3e, 3f), in which it closes a path (5) which short-circuits the motor (1) to cause it to brake and stop, and

a travel-limit switch (8) controlled by the electric motor (1) and movable between a working position, in which it closes a supply circuit (6) arranged to keep the relay (3) energised even after the control switch (2) has been opened, and a rest position, in which it opens the supply circuit (6) when the at least one wiper arm (B) reaches a predetermined position ;

the time interval in which the travel-limit switch (8) switches between its working position and its rest position being greater than the time interval in which the relay (3) switches between the first and second positions ;

characterised in that the travel-limit switch is connected to the path (5) for short-circuiting the electric motor (1) so as to enable it to be closed only when said travel-limit switch (8) has reached the rest position.

## Patentansprüche

1. Eine Wischervorrichtung für eine Windschutz- oder Heckscheibe für Kraftfahrzeuge, mit einem Gleichstrom-Elektromotor (1) zum Betrieb von zumindest einem Wischarm (B), sowie einer Steuerschaltung, die folgendes umfaßt :
einen manuell betätigbaren Steuerschalter (2),
ein Relais (3) mit einer Erregerwicklung (3a), die mittels des Steuerschalters (2) an eine Stromversorgung $(V_B)$ anschließbar ist, und einem Kontaktglied (3b), welches zwischen einer ersten Stellung (3c, 3d), in der es den Motor (1) an die Stromversorgung $(V_B)$ anschließt, und einer zweiten Stellung (3e, 3f), in der es eine Bahn (5) schließt, welche den Motor (1) zu seiner Bremsung und Stillstand kurzschließt, bewegbar ist, und
einen Wegbegrenzungsschalter (8), der von dem Elektromotor (1) gesteuert wird und zwischen einer Arbeitsstellung, in der er eine Versorgungsschaltung (6) schließt, die das Relais (3) sogar nach Öffnung des Steuerschalters (2) in erregtem Zustand halten soll, und einer Ruhestellung, in der er die Versorgungsschaltung (6) öffnet, wenn der zumindest eine Wischerarm (B) eine vorbestimmte Stellung erreicht, bewegbar ist ;
wobei das Zeitintervall, in dem der Wegbegrenzungsschalter (8) zwischen seiner Arbeitsstellung und seiner Ruhestellung schaltet, größer ist als das Zeitintervall, in dem das Relais (3) zwischen der ersten und der zweiten Stellung schaltet ; **dadurch gekennzeichnet,**
daß der Wegbegrenzungsschalter mit der Bahn (5) zur Kurzschließung des Elektromotors (1) verbunden ist, damit sie nur dann geschlossen wird, wenn der Begrenzungsschalter (8) die Ruhestellung erreicht hat.

## Revendications

1. Dispositif formant essuie-glace pour le pare-brise ou la lunette arrière de véhicules motorisés, comportant un moteur électrique (1) à courant continu pour manoeuvrer au moins un bras (B) d'essuie-glace ainsi qu'un circuit de commande comprenant
un commutateur de commande (2) manoeuvrable manuellement,
un relais (3) avec un bobinage d'excitation (3a) qui peut être relié à une alimentation électrique $(V_B)$ au moyen du commutateur de commande (2), et un élément formant contact (3b) qui peut se déplacer entre une première position (3c, 3d), dans laquelle il relie le moteur (1) avec l'alimentation électrique $(V_B)$ et une seconde position (3e, 3f) dans laquelle il ferme un chemin (5) qui court-circuite le moteur (1) pour le faire freiner et s'arrêter, et
un commutateur de fin de course (8) commandé par le moteur électrique (1) et pouvant se déplacer entre une position de travail, dans laquelle il ferme un circuit d'alimentation (6) conçu pour maintenir le relais (3) sous tension même après ouverture du commutateur de commande (2), et une position de repos, dans laquelle il ouvre le circuit d'alimentation (6) lorsqu'au moins un bras (B) de l'essuie-glace atteint une position prédéterminée ;
l'intervalle de temps pendant lequel le commutateur de fin de course (8) commute entre sa position de travail et sa position de repos étant supérieur à l'intervalle de temps pendant lequel le relais (3) commute entre la première et la seconde positions ;
caractérisé par le fait que le commutateur de fin de course est relié au chemin (5) de mise en court-circuit du moteur électrique (1) de façon à ne permettre à ce chemin de se fermer que lorsque ledit commutateur de fin de course (8) a atteint la position de repos.

FIG. 1

FIG. 2